# EUROPEAN PATENT APPLICATION

(11) **EP 1 524 021 A1**
(43) Date of publication of application: **20.04.2005**
(21) Application number: 04256312.2
(22) Date of filing: 13.10.2004
(51) Int. Cl.: B01D 27/10

(54) **Valve and spring for fluid filter**

(30) Priority: 14.10.2003 US 684605
(71) Applicant: ArvinMeritor Technology, LLC, Troy, MI 48084 (US)
(72) Inventor: Cline, Steven, Fayetteville, North Carolina 28306 (US)
(74) Representative: Jones, John Bryn

(57) **Abstract**

A fluid filter includes a housing having a tapping plate with a first aperture. A center tube is arranged in the housing proximate to the tapping plate. The center tube includes a second aperture. An elastomeric valve assembly is arranged between the center tube and the tapping plate. The valve assembly comprises an integrated, one-piece relief valve and anti-drain back valve. The anti-drain back valve is arranged adjacent to the first aperture for selectively blocking the first aperture to prevent fluid from exiting the inlet side of the filter during pressure drops. The relief valve is arranged adjacent to the second aperture for selectively blocking the second aperture to permit fluid to flow past the relief valve during high pressure conditions such as cold starts. A generally concave conical spring radially biases the relief valve closed.

## Description

### BACKGROUND OF THE INVENTION

This invention relates to a fluid filter such as an oil filter, and more particularly, the invention relates to a valve and spring for fluid filters.

Fluid filters such as oil filters typically include one or more valves to regulate the flow of fluid through the filter during various operating conditions. For example, the filter may incorporate an anti-drain back valve to prevent fluid from exiting the inlet side of the filter during a pressure drop thereby carrying debris from the filter element. A filter also may use a relief valve for permitting the fluid to bypass the filter element under high pressures, such as when the oil is very viscous during engine cold starts in oil filter applications.

Many fluid filter valve configurations have been used. One common valve configuration uses a valve arranged near the tapping plate of the filter housing. A moveable piston is arranged adjacent to a fluid aperture. A coil spring biases the moveable piston to a desired position. The moveable piston slides axially relative to a center portion of the filter between open and closed positions under the axial biasing force of the spring. For fluid configurations having a center tube, a seal between the center tube and tapping plate must also be used to prevent fluid from bypassing the filter element. An additional valve is used within the filter to provide further control of the fluid flow through the filter. Additional seals are used with the valve to prevent fluid leakage. As a result, a typical fluid filter uses numerous assembled components that are costly. Furthermore, since so many components are required for the valves, a misalignment may result causing undesired operation of the valve. The spring and piston arrangement result in added length to the filter housing or reduced size of the filter element that may be packaged within the housing to accommodate size and motion of the piston assembly during operation. Therefore, what is needed is a more efficient design for fluid filter valves.

### SUMMARY OF THE INVENTION AND ADVANTAGES

The present invention provides a fluid filter including a housing having an end portion, such as tapping plate, with a first aperture. A center portion, such as a center tube, is arranged in the housing proximate to the end portion. The center portion includes a second aperture. In one example embodiment, a valve assembly is arranged between the center portion and the end portion for creating a seal between the portions. The valve assembly may be constructed from an elastomeric material such as rubber.

The valve assembly comprises an integrated, one-piece relief valve and anti-drain back valve. However, the valves need not be integrated to be used with the inventive spring. The anti-drain back valve is arranged adjacent to the first aperture for selectively blocking the first aperture to prevent fluid from exiting the inlet side of the filter during pressure drops. The relief valve is arranged adjacent to the second aperture for selectively blocking the second aperture to permit fluid to flow past the relief valve during high pressure conditions, such as for cold starts in oil filter applications.

In one example embodiment, the valve assembly extends respectively between first and second terminal ends of the relief and at anti-drain back valves. In the example shown, a recess may be arranged between the valves for supporting the valve assembly on the center portion. In this arrangement, the valve assembly also acts as a seal between the center portion and end portion. A generally conical or hemi-elliptical, egg-shaped spring applies a radial biasing force on one of the valves to urge the valve to a closed position to block the flow of fluid through the aperture associated with the valve. The spring includes elongated slots forming flexible fingers that deflect under the force of fluid at a desired pressure permitting the valve to open. In the example shown, the spring is associated with the operation of the relief valve.

The inventive arrangement significantly reduces the number of valve assembly components and eliminates the seal typically used between the center portion and end portion. Moreover, the overall size of the valve assembly is reduced, which permits the use of either a smaller filter or a larger filter element.

### BRIEF DESCRIPTION OF THE DRAWINGS

Other advantages of the present invention can be understood by reference to the following detailed description when considered in connection with the accompanying drawings wherein:
Figure 1 is a cross-sectional view of a fluid filter with an example of the inventive valve assembly with integrated relief and anti-drain back valves.
Figure 2 is an enlarged cross-sectional view of the valve assembly shown in Figure 1.
Figure 3 is a bottom elevational view of the inventive spring shown in Figure 1.
Figure 4 is a perspective view of another example of the inventive valve assembly.

### DETAILED DESCRIPTION OF THE PREFERRED EMBODIMENT

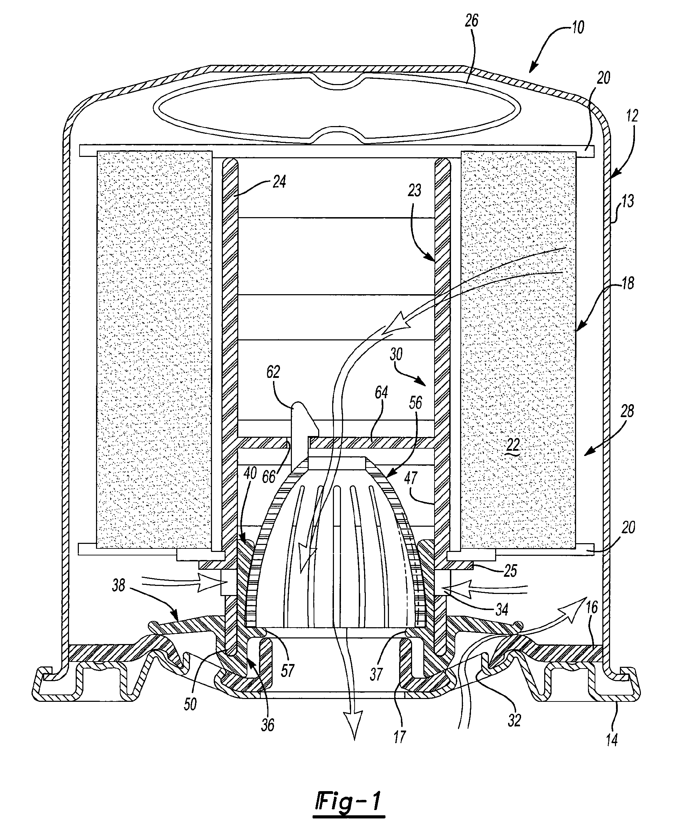

A fluid filter 10 is shown in Figure 1. The filter 10 shown is suitable for use as a vehicle oil filter, however, this invention may be used in any fluid filter application. The filter 10 comprises a housing 12 including a can 13 with a retainer 14 secured to the open end of the can. The housing 12 also includes a tapping plate 16 typically arranged interiorly and adjacent to the retainer 14. The tapping plate 16 includes a central threaded hole 17 for securing the filter 10 to a structure having fluid passages that carry the fluid to and from a desired location such as a vehicle engine.

A filter assembly 18 is arranged within the housing 12. The filter assembly 18 includes end discs 20 having a filter media 22, such as a paper filter element, arranged between the end disc 20 in any suitable manner, which is well known in the art. The filter media 22 may define a central opening 23. Typically, the filter media 22 is a pleated paper element and may have a center tube 24 inserted into the central opening 23 of the filter media 22 to provide structural support for the pleated paper element. The center tube 24 has a collar 25 for axially locating the center tube 24 relative to the end disc 20. A guide 26 is arranged between the filter assembly 18 and the housing 12 to position the filter assembly 18 in a desired manner during assembly of the filter 10.

The filter 10 has an inlet side 28 on one side of the filter media 22 and an outlet side 30 on the opposite side of the filter media 22. For the arrangement shown, the inlet side 28 corresponds to the outside of the filter assembly 18, and the outlet side 30 corresponds to the inside or central opening 23. The retainer 14 and tapping plate 16 include apertures 32 to permit fluid to flow from the structure supporting the filter 10 to the inlet side 28. During normal operation, the fluid flows through the filter media 22 to the central opening 23, which corresponds to the outlet side 30, to remove debris from the fluid. Fluid then flows through the central opening 23 and exits through the threaded hole 17 back through the structure supporting the filter 10. However, it is to be understood that the fluid flow may be other than described above depending upon the application and customer specifications.

It is desirable to incorporate valves within the filter to prevent fluid from draining from the dirty or inlet side 28 of the filter 10 back to the structure supporting the filter 10 during pressure drops. It is also desirable to provide valves within the filter 10 to permit fluid to bypass the filter assembly 18 during high pressure conditions, such as vehicle cold starts at very low temperatures in which the fluid may be very viscous. In the prior art, these valves have been separate and have included many components, such as coil springs.

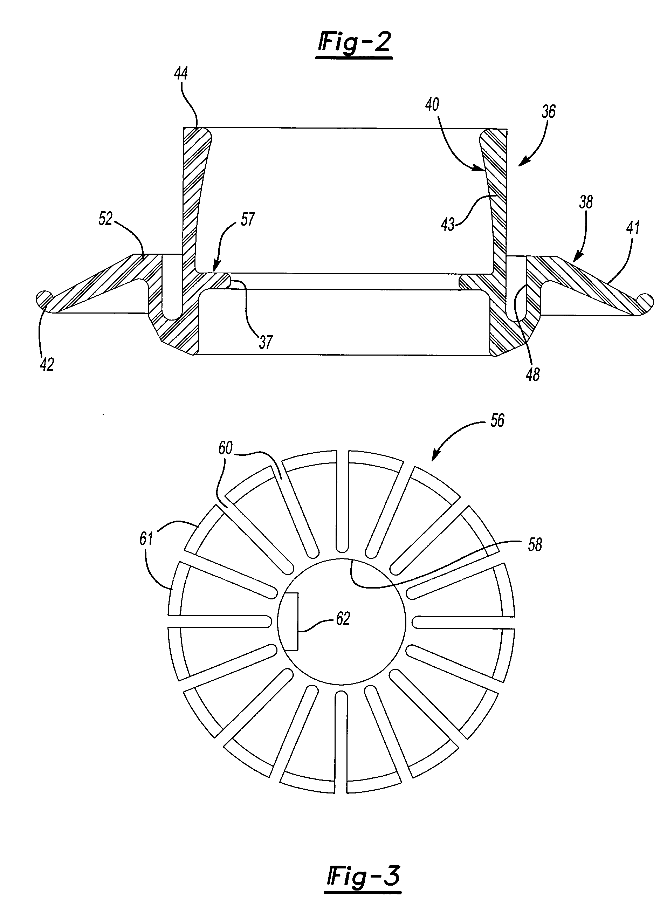

The inventive valve assembly 36 comprises an integrated or one-piece anti-drain back valve 38 and relief valve 40. As best shown in Figure 2, the valve assembly 36 extends continuously from a first terminal end 42 of the anti-drain back valve to a second terminal end 44 of the relief valve 40. In one example embodiment, the anti-drain back valve 38 includes a first annular lip 41 ending to the first terminal end 42. Similarly, the relief valve 40 includes a second annular lip 43 ending to the second terminal end 44. The terminal ends 42, 44 include enlarged portions that better enable the lips 41, 43 to seal against their respective scaling surfaces. A hole 37 in the valve assembly 36 permits fluid flow through the filter 10.

Referring to Figures 1 and 2, the valve assembly 36 includes an annular recess 48 separating the anti-drain back valve 38 and the relief valve 40. An end 50 of the center tube 24 is received in the recess 48. The valve assembly 36 in the area of the recess 48 forms a U-shaped portion forming a seal between the center tube 24 and tapping plate 16 preventing fluid from bypassing the filter assembly 18. In this manner, the valve assembly 36 eliminates the separate seal typically used between the center tube 24 and tapping plate 16.

Returning to Figure 1, the anti-drain back valve 38 is arranged adjacent to the aperture 32 in the retainer 14 and tapping plate 16. The anti-drain back valve is deflected upward to permit fluid flow into the inlet side 28 of the filter 10. The terminal end 42 of the anti-drain back valve 38 seals against a raised portion of the tapping plate 16 to prevent fluid on the inlet side 28 from carrying debris from the filter media 22 out of the filter 10 during pressure drops.

The center tube 24 includes an opening 34. The relief valve 40 is arranged adjacent to the opening 34 for preventing fluid from bypassing the filter assembly 18 during normal operation. However, during conditions in which the fluid is very viscous such as during vehicle cold starts at low temperatures, it may be desirable to bypass the filter assembly 18 in which case the terminal end 44 is forced out of engagement with the inner surface 47 by the viscous, high pressure fluid.

One example of the inventive spring 56 is shown in Figures 1 and 3. The spring 56 is generally conical in shape. More specifically, the spring is hemi-elliptical or shaped like half of an egg. The spring 56 engages the inside surface of the relief valve 40 and biases the relief valve 40 into engagement with the inner surface 47 of the center tube 24. The spring 56 may include an opening 58 or any other apertures for permitting flow of fluid through the filter 10.

The spring 56 may include multiple elongated slots 60 forming flexible fingers 61 to more easily permit deflection of the spring 56 around its periphery under the force on the relief valve 40 created by fluid pressure at the opening 34. The spring 56 may be constructed from any suitable material such as a thin metal or plastic. The biasing force of the spring 56 may be altered by changing the geometry of the slots 60, thickness of the material, or other suitable means.

The valve assembly 36 includes a shoulder 57 against which the end of the spring 56 is seated in an installed position. The filter 10 may include features to retain the spring 56 in a desired longitudinal position during operation. For example, the center tube 24 may include a lateral support 64 having an aperture 66. A retainer 62 may extend from the top of the spring 56 near the opening 58 and be received by the aperture 66. In this manner, the spring 56 will not disengage form the inner surface of the relief valve 40 as the fluid flows through the filter 10.

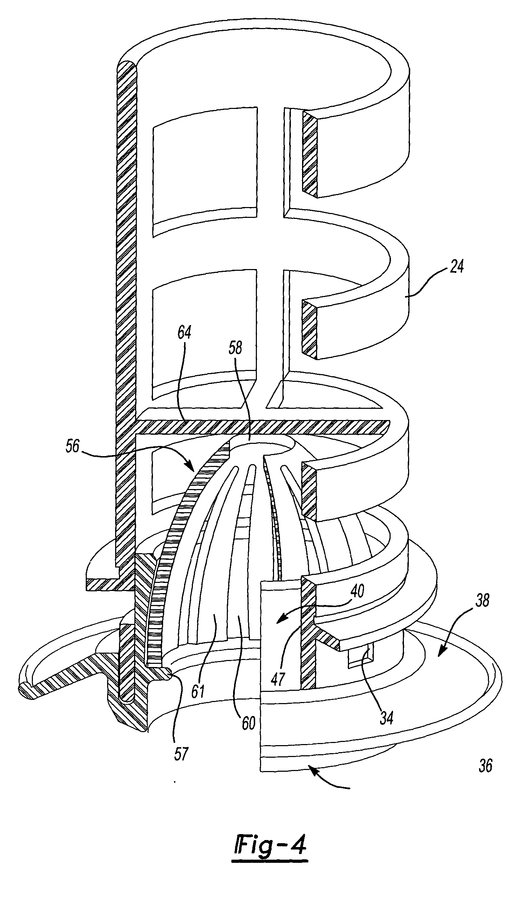

Figure 4 depicts another example of the inventive spring 56. The spring 56 includes larger elongated V-shaped slots 60 increasing the flexibility of the fingers 61 as compared to the configuration shown in Figure 3. The spring 56 is retained in its longitudinal position by a pair of lateral supports 64 within the center tube 24.

The filter 10 is assembled by inserting the spring 56 into the hole 37 in the valve assembly. The end of the spring 56 is placed in abutment with the shoulder 57. The valve assembly 36 including the spring 56 is installed onto the end 50 of the center tube 24 such that the end 50 is received in the recess 48 of the valve assembly 36. The filter media 22 and end discs 20 may be installed onto the center tube 24 during any suitable time in the filter assembly process. Manufacture of the filter 10 is completed in a known manner.

The valve assembly 36 may be an elastomeric material such as a rubber. The pressures at which the valves 38 and 40 may be opened may be modified by using rubbers of different durometers or varying the thicknesses in desired areas of the valves 38 and 40 to change the opening characteristics of the valves 38 and 40. For example, the valves 38 includes a "knee" 52 that acts as a fulcrum. The location, geometry, and thickness of the knee 52 may be varied to change the opening characteristics.

The invention has been described in an illustrative manner, and it is to be understood that the terminology that has been used is intended to be in the nature of words of description rather than of limitation. Obviously, many modifications and variations of the present invention are possible in light of the above teachings. It is, therefore, to be understood that within the scope of the appended claims the invention may be practiced otherwise than as specifically described.

## Claims

1. A fluid filter comprising:
a housing having an end portion with a first aperture;
a center portion arranged in said housing and proximate to said end portion, said center portion including a second aperture;
a valve assembly proximate to said center portion and including a relief valve and an anti-drain back valve, said anti-drain back valve adjacent to said first aperture for selectively blocking said first aperture, and said relief valve adjacent to said second aperture for selective blocking said second aperture; and
a spring applying a radial force to said relief valve biasing said relief valve towards said center portion.

2. The fluid filter according to claim 1, wherein the valve assembly is an elastomeric material.

3. The fluid filter according to claim 1 or 2, wherein the relief and anti-drain back valves are integrally formed and extend continuously from a first terminal end of said relief valve to a second terminal end of said anti-drain back valve.

4. The fluid filter according to any preceding claim, wherein valve assembly includes an axial hole with said spring arranged at least partially in said axial hole.

5. The fluid filter according to any preceding claim, wherein said valve assembly includes a U-shaped portion defining a recess with an end of said center portion received in said recess, said recess separating said relief and anti-drain back valves.

6. The fluid filter according to claim 5, wherein said U-shaped portion seals against said end portion preventing fluid flow past said U-shaped portion between said first and second apertures.

7. The fluid filter according to any preceding claim, including a filter element arranged within said housing and defining a central opening, said center portion comprising a center tube arranged within said central opening, said center tube including a support member capturing said spring and maintaining said spring in an axial position.

8. The fluid filter according to claim 7, wherein said support member includes a third aperture and said spring includes a retainer received in said third aperture.

9. The fluid filter according to claim 7 or 8, wherein said relief valve seals against an inner surface of said center tube in a closed position in response to said radial force.

10. A fluid filter valve arrangement comprising:
a wall having an opening;
an valve including a longitudinally extending annular lip forming a central hole, said annular lip selectively blocking said opening; and
a spring at least partially disposed within said hole, said spring generating a radial force on said annular lip biasing said annular lip towards said wall.

11. The valve arrangement according to claim 10, wherein said wall is generally cylindrical and preferably said wall is a center tube for supporting a filter element.

12. The valve arrangement according to claim 10 or 11, wherein spring is concave with a generally circular cross-section.

13. The valve arrangement according to any one of claims 10 to 12, wherein said valve includes a radially inwardly extending shoulder supporting an end of said spring,
and/or wherein said spring includes another opening for permitting fluid flow through said spring,
and/or wherein said valve includes another annular lip extending in a direction transverse to said annular lip, said annular lips contiguous with one another.

14. The fluid filter according to any one of claims 1 to 9 or the valve arrangement according to any one of claims 10 to 13, wherein said spring includes a hemi-elliptical cross-section.

15. The fluid filter according to any one of claims 1 to 9 or 14 or the valve arrangement according to any one of claims 10 to 14, wherein spring includes multiple spaced apart longitudinally extending slots adjacent to said lip forming flexible fingers.
